# EUROPÄISCHE PATENTSCHRIFT

(11) **EP 2 911 898 B1**
(45) Veröffentlichungstag und Bekanntmachung des Hinweises auf die Patenterteilung: **23.01.2019**
(21) Anmeldenummer: 13776725.7
(22) Anmeldetag: 10.10.2013
(51) Int. Cl.: B60G 17/015, B60G 17/06, F16F 15/03

(54) **GENERATOR MIT ELEKTRISCHEM GETRIEBE**
GENERATOR WITH ELECTRIC TRANSMISSION
GÉNÉRATEUR AVEC TRANSMISSION ÉLECTRIQUE

(30) Priorität: 26.10.2012 DE 102012021018
(43) Veröffentlichungstag der Anmeldung: 02.09.2015
(73) Patentinhaber: Audi AG, 85045 Ingolstadt (DE)
(72) Erfinder: WILLEMS, Marco, 85053 Ingolstadt (DE)
(74) Vertreter: Reichert, Thomas Klaus
(86) Internationale Anmeldenummer: PCT/EP2013/003046
(87) Internationale Veröffentlichungsnummer: WO 2014/063786

(56) Entgegenhaltungen:
- EP-A1- 1 197 363
- EP-A1- 1 582 383
- EP-A1- 2 012 042
- JP-A- 2004 215 375
- US-A- 5 070 284
- US-A1- 2012 193 179
- US-B2- 6 859 702

## Beschreibung

Die Erfindung betrifft eine elektrische Dämpferanordnung für ein Kraftfahrzeug gemäß dem Oberbegriff des Anspruchs 1.

JP 2004215375 offenbart eine elektrische Dämpferanordnung für ein Kraftfahrzeug. In bekannter Weise umfasst eine elektrische Dämpferanordnung für ein Kraftfahrzeug einen elektrischen Dämpfer mit einem Rotor und einem Stator. Der Dämpfer verbindet ein erstes Bauteil und ein relativ zu diesem bewegbares zweites Bauteil, wobei ein Bauteil mit dem Rotor, das andere Bauteil mit dem Stator verbunden ist. Ferner sind Erregerwicklungen und Induktionswicklungen vorgesehen, wobei eine Relativdrehung von Rotor zu Stator zu einer Relativdrehung von Erregerwicklungen zu Induktionswicklungen führt. Die Erregerwicklungen werden mit elektrischer Energie versorgt, um ein elektromagnetisches Feld zu erzeugen. Eine Relativbewegung von Erregerwicklungen zu Induktionswicklungen eine Induktionsspannung in die Induktionswicklungen induziert.

Es ist Aufgabe der Erfindung eine elektrische Dämpferanordnung anzugeben, die verbesserte Dämpfungseigenschaften aufweist.

Die Aufgabe wird durch die kennzeichnenden Merkmale des Anspruchs 1 in Verbindung mit seinen Oberbegriffsmerkmalen gelöst.

Die Unteransprüche bilden vorteilhafte Weiterentwicklungen der Erfindung.

Erfindungsgemäß umfasst die elektrische Dämpferanordnung einen Sensor, der die Bewegung des ersten Bauteils gegenüber dem zweiten Bauteil detektiert. Ferner ist eine Steuereinheit vorgesehen, die mit dem Sensor und dem Dämpfer verbunden ist, wobei die Steuereinheit die Erregerwicklung derart mit elektrischer Energie versorgt, dass ein elektromagnetisches Drehfeld entsteht, dessen Richtung und Drehgeschwindigkeit abhängig von der detektierten Bewegung ist. Das elektromagnetische Drehfeld überlagert dabei die mechanische Relativdrehung von Rotor zu Stator.

Durch die Überlagerung der mechanischen Drehbewegung mit dem elektromagnetischen Drehfeld kann die relative Rotationsgeschwindigkeit des Erregerfeldes gegenüber den Induktionswicklungen beeinflusst werden. Dadurch kann die Relativgeschwindigkeit der Drehung des elektromagnetischen Felds zum Stator und dadurch die Dämpfereigenschaft beeinflusst werden.

Die Dämpferanordnung ist derart ausgestaltet, dass das erste Bauteil ein Lenker eines Fahrwerks eines Fahrzeugs ist, und dass das zweite Bauteil ein Teil eines Fahrzeugaufbaus ist.

Der Sensor ist zwischen Lenker und Fahrzeugaufbau angeordnet, um den Federweg und die Beschleunigung des Lenkers und damit das naturgemäß an den Lenker angebundene Rad zu detektieren.

Die detektierte Bewegung wird insbesondere von der Steuereinheit so umgerechnet, dass aus der vertikalen Rad- bzw. Lenkerbewegung die notwendige Drehrichtung und Drehgeschwindigkeit des elektromagnetischen Drehfelds ermittelt wird und dieses durch entsprechende Beaufschlagung der Erregerwicklungen angepasst wird. Das aufgrund der Induktionsspannung erzeugte Moment ist proportional zur Relativgeschwindigkeit zwischen Rotor und Stator.

Vorzugsweise ist die Steuereinheit derart eingerichtet, dass ein elektromagnetisches Drehfeld erzeugt wird, dessen Drehrichtung der Drehrichtung der Relativdrehung von Erregerwicklungen zu Induktionswicklung entspricht.

Eine gleichgerichtete Überlagerung der beiden Drehbewegungen führt zu einer Erhöhung der Relativdrehung von Erregerfeld zu den Induktionswicklungen. Die erhöhte Drehgeschwindigkeit hat eine erhöhte Induktion in die Induktionswicklungen zur Folge, wodurch der elektrische Dämpfer der mechanischen Bewegung stärker entgegenwirkt.

Eine besonders vorteilhafte Ausgestaltung ergibt sich, indem die Erregerwicklungen mit dem Rotor und die Induktionswicklungen mit dem Stator verbunden sind.

In einer weiteren vorteilhaften Ausgestaltung ist der Lenker über eine Schubstange (Pushrod) an den Dämpfer angelenkt. Da insbesondere Schlagbewegungen des Rads gegenüber dem Fahrzeugaufbau gedämpft werden müssen eignet sich eine Schubstange zum Einleiten der Kräfte in den Dämpfer.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugzeichen verwendeten Begriffe und zugeordneten Bezugzeichen verwendet. In der Zeichnung bedeutet:
- Fig. 1: eine prinzipielle Darstellung einer Dämpferanordnung
- Fig. 2: eine prinzipielle Darstellung eines erfindungsgemäßen elektrischen Dämpfers.

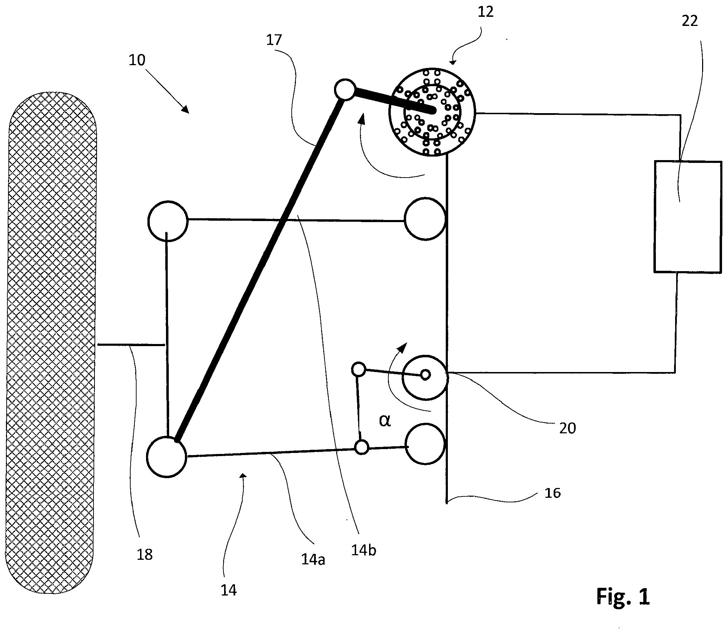

Fig. 1 zeigt eine prinzipielle Darstellung einer erfindungsgemäßen Dämpferanordnung 10. Ein elektrischer Dämpfer 12 verbindet hier zwei gegeneinander bewegbaren Bauteile 12, 14, nämlich einen Fahrzeugaufbau, insbesondere einen Hilfsrahmen 12 und einen Querlenker 14. Der Querlenker 14 ist mit einem Radträger 18 versehen, der durch oberen Querlenker 14a und unteren Querlenker 14b gehalten wird. Dadurch ermöglicht die Anordnung eine vertikale Bewegung des Rades bzw. des Radträgers 18, indem die Querlenker eine Verschwenkung um ihre Auflagepunkte am Fahrzeugaufbau erlauben. Diese Bewegung wird durch die Verbindung des Rotors des Dämpfers 12 über eine Schubstange 17 - Pushrod - vom Radträger übertragen. Der Stator des Dämpfers 12 ist mit dem Fahrzeugaufbau 16 drehfest verbunden. Eine Bewegung des Rades wird durch die Schubstange 17, die an den Rotor des Dämpfers angelenkt ist, in eine Drehbewegung gewandelt.

Erfindungsgemäß ist am Fahrzeugaufbau 16 ein Drehsensor 20 vorgesehen, der mit dem Querlenker 14 verbunden ist. Dieser Sensor detektiert den vom Rad ausgeführten Federweg und übermittelt diesen an eine Steuereinheit 22. Die Steuereinheit 22 ist mit dem elektrischen Dämpfer 12 insbesondere mit dessen Rotor verbunden. Der Rotor ist mit Erregerspulen ausgestattet, die von der Steuereinheit mit einem Drehfeld beaufschlagt werden, dessen Drehrichtung der Drehrichtung entspricht, die durch die vertikale Radbewegung auf den Dämpfer übertragen wird. Dadurch wird die Relativdrehung des Erregerfeldes gegenüber den Statorwicklungen, welche hier als Induktionswicklungen ausgebildet sind, deutlich erhöht. Das dadurch erzeugte Gegenmoment wird gegenüber einem statischen Feld deutlich erhöht, wodurch eine verbesserte Dämpfwirkung erreicht wird.

Ob die Schubstange am Radträger 18 oder am unteren Querlenker 14b oder oberen Querlenker 14a befestigt ist, spielt dabei eine untergeordnete Rolle. Wesentlich ist, dass die Bewegung bzw. der Querlenker 14 so auf den elektrischen Dämpfer 10 übertragen wird, dass ein von diesem erzeugtes Drehmoment der Lenkerbewegung entgegen wirkt.

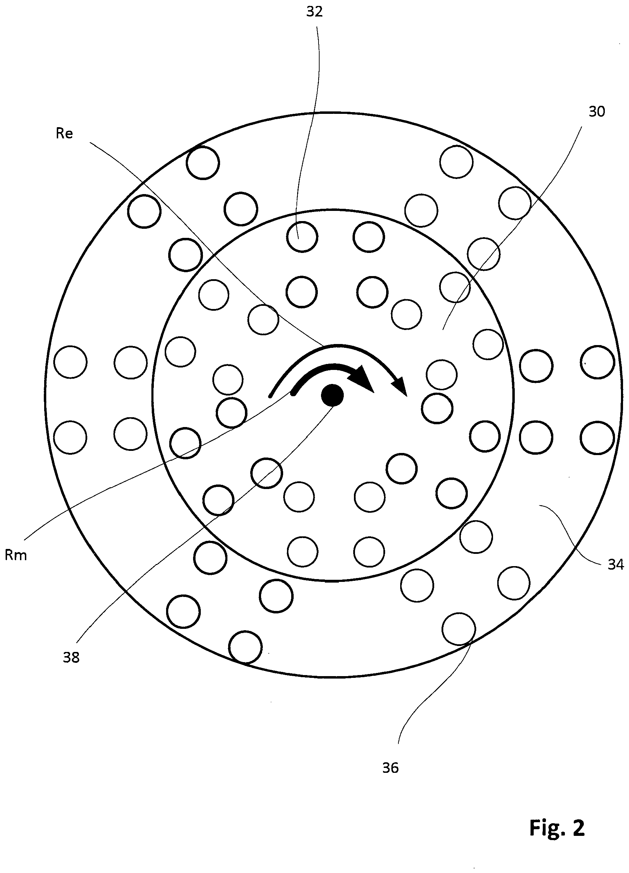

Fig. 2 zeigt eine schematische Schnittansicht eines erfindungsgemäßen elektrischen Dämpfers 12 wie in Fig. 1 verwendet. Der Dämpfer 12 umfasst einen Rotor 30 der mit Erregerspulen 32 versehen ist. Zudem umfasst der Dämpfer 12 einen Stator 34 der mit Induktionsspulen 36 versehen ist. An der Rotorwelle 38 kann ein Hebel zur Anlenkung der Schubstange vorgesehen sein, um die Drehbewegung des Rotors 30 zu erzeugen. In derselben Drehrichtung wie der Rotor 30 gegenüber dem Stator 32 gedreht wird, wird ein elektromagnetisches Erregerfeld erzeugt, das als Drehfeld in dieser Richtung rotiert. Die aufgrund des Drehfeldes erhöhte relative Geschwindigkeit zwischen Erregerfeld und Statorfeld führt zu einem erhöhten Bremsmoment im Unterschied zu einem statischen Feld.

### Bezugszeichenliste

- 10: Dämpferanordnung
- 12: Dämpfer
- 14: Querlenker
- 14a: oberer Querlenker
- 14b: unterer Querlenker
- 16: Fahrzeugaufbau
- 17: Schubstange
- 18: Radträger
- 20: Drehsensor
- 22: Steuereinheit
- 30: Rotor
- 32: Erregerspulen
- 34: Stator
- 36: Induktionsspulen
- 38: Rotorwelle

## Patentansprüche

1. Elektrische Dämpferanordnung (10) umfassend einen Dämpfer (12) mit einem Rotor (30) und einem Stator (34), wobei Rotor (30) und Stator (34) ein erstes Bauteil und ein relativ zu diesem bewegbares zweites Bauteil verbinden, zudem sind Erregerwicklungen und Induktionswicklungen vorgesehen, wobei eine Relativdrehung von Rotor (30) zu Stator (34) zu einer Relativdrehung von Erregerwicklungen zu Induktionswicklungen führt, wobei die Erregerwicklungen mit elektrischer Energie versorgt werden, um ein elektromagnetisches Feld zu erzeugen, wobei eine Relativbewegung von Erregerwicklungen zu Induktionswicklungen eine Induktionsspannung in die Induktionswicklungen induziert, ein Sensor (20) vorgesehen ist, der die Bewegung des ersten Bauteils gegenüber dem zweiten Bauteil detektiert, ferner ist eine Steuereinheit (22) vorgesehen, die mit dem Sensor (20) und dem Dämpfer (12) verbunden ist, wobei die Steuereinheit (22) die Erregerwicklung derart mit elektrischer Energie versorgt, dass ein elektromagnetisches Drehfeld entsteht, das die Relativdrehung von Rotor (30) zu Stator (34) überlagert, wobei das erste Bauteil ein Lenker eines Fahrwerks eines Fahrzeugs ist, und das zweite Bauteil ein Fahrzeugaufbau (16) ist, **dadurch gekennzeichnet, dass** der Sensor (20) zwischen Lenker und Fahrzeugaufbau (16) angeordnet ist, um den Federweg und die Beschleunigung des Lenkers zu detektieren, wobei die Steuereinheit (22) derart ausgestaltet ist, dass Drehrichtung und Drehgeschwindigkeit des elektromagnetischen Drehfeldes abhängig vom gemessenen Federweg und der Beschleunigung des Lenkers angepasst werden.

2. Dämpferanordnung (10) nach Anspruch 1, **dadurch gekennzeichnet, dass** die Steuereinheit (22) ein elektromagnetisches Drehfeld erzeugt, dessen Drehrichtung der Drehrichtung der Relativdrehung von Erregerwicklungen zu Induktionswicklung entspricht.

3. Fahrwerk nach Anspruch 1 oder 2, **dadurch gekennzeichnet, dass** der Lenker über eine Schubstange (17) (Pushrod) an dem Dämpfer (12) angelenkt ist.

## Claims

1. Electric damper assembly (10) comprising a damper (12) having a rotor (30) and a stator (34), wherein rotor (30) and stator (34) connect a first component and a second component that can be moved relative to said first component, in addition, excitation coils and induction coils are provided, wherein a rotation of rotor (30) relative to stator (34) causes a rotation of excitation coils relative to the induction coils, wherein the excitation coils are supplied with electric energy, in order to generate an electromagnetic field, wherein a movement of excitation coils relative to induction coils induces an induction voltage in the induction coils, a sensor (20) is provided, which detects the movement of the first component relative to the second component, a control unit (22) is also provided, which is connected to the sensor (20) and to the damper (12), wherein the control unit (22) supplies the excitation coil with electric energy in such a way that an electromagnetic rotary field is generated, which overlies the rotation of the rotor (30) relative to the stator (34), wherein the first component is a link of a chassis of a motor vehicle, and the second component is a vehicle body (16), **characterised in that** the sensor (20) is arranged between link and vehicle body (16), in order to detect the spring travel and the acceleration of the link, wherein the control unit (22) is designed in such a manner that the rotational direction and rotational velocity of the electromagnetic rotary field are adjusted depending on the measured spring travel and the acceleration of the link.

2. Damper assembly (10) according to claim 1, **characterised in that** the control unit (22) generates an electromagnetic rotary field, the rotational direction of which corresponds to the rotational direction of the rotation of the excitation coils relative to the induction coils.

3. Chassis according to claim 1 or 2, **characterised in that** the link is articulated on the damper (12) via a pushrod (17).

## Revendications

1. Agencement d'amortisseur électrique (10) comprenant un amortisseur (12) avec un rotor (30) et un stator (34), dans lequel le rotor (30) et le stator (34) relient un premier composant et un second composant mobile par rapport à celui-ci, des bobines d'excitation et des bobines d'induction sont de plus prévues, dans lequel une rotation relative du rotor (30) par rapport au stator (34) entraîne une rotation relative de bobines d'excitation par rapport aux bobines d'induction, dans lequel les bobines d'excitation sont alimentées en énergie électrique afin de générer un champ électromagnétique, dans lequel un mouvement relatif de bobines d'excitation par rapport aux bobines d'induction induit une tension d'induction dans les bobines d'induction, un capteur (20) est prévu, lequel détecte le mouvement du premier composant par rapport au second composant, une unité de commande (22) est de plus prévue, laquelle est raccordée au capteur (20) et à l'amortisseur (12), dans lequel l'unité de commande (22) alimente la bobine d'excitation en énergie électrique de telle manière qu'un champ rotatif électromagnétique apparaisse, lequel se superpose à la rotation relative du rotor (30) par rapport au stator (34), dans lequel le premier composant est un bras d'un mécanisme de roulement d'un véhicule, et le second composant est une carrosserie de véhicule (16), **caractérisé en ce que** le capteur (20) est agencé entre le bras et la carrosserie de véhicule (16) afin de détecter la course de ressort et l'accélération du bras, dans lequel l'unité de commande (22) est configurée de telle manière que le sens de rotation et la vitesse de rotation du champ rotatif électromagnétique soient adaptés en fonction de la course de ressort mesurée et l'accélération du bras.

2. Agencement d'amortisseur (10) selon la revendication 1, **caractérisé en ce que** l'unité de commande (22) génère un champ rotatif électromagnétique dont le sens de rotation correspond au sens de rotation de la rotation relative de bobines d'excitation par rapport à la bobine d'induction.

3. Mécanisme de roulement selon la revendication 1 ou 2, **caractérisé en ce que** le bras est articulé par le biais d'une tige de poussée (17) (pushrod) à l'amortisseur (12).
